# EUROPÄISCHE PATENTSCHRIFT

(11) **EP 2 337 130 B1**
(45) Veröffentlichungstag und Bekanntmachung des Hinweises auf die Patenterteilung: **07.02.2018**
(21) Anmeldenummer: 10015585.2
(22) Anmeldetag: 14.12.2010
(51) Int. Cl.: H01M 8/02, B22F 5/08, C22C 33/02, C22C 27/06, H01M 8/0206, H01M 8/021, B22F 3/02

(54) **Formteil**
Moulded part
pièce moulée

(30) Priorität: 15.12.2009 AT 79409 U
(43) Veröffentlichungstag der Anmeldung: 22.06.2011
(73) Patentinhaber: PLANSEE SE, 6600 Reutte (AT)
(72) Erfinder: Brandner, Marco, Dr., 87466 Oy-Mittelberg (DE); Gerzoskovitz, Stefan, D-82467 Garmisch-Partenkirchen (AT); Kraussler, Wolfgang, 6671 Weissenbach (AT); Leuprecht, Alexander, 6671 Weissenbach (AT); Venskutonis, Andreas, Dr., 6600 Reutte (AT)

(56) Entgegenhaltungen:
- WO-A1-02/055747
- AT-U1- 6 260

## Beschreibung

Durch Pressen und Sintern eines pulverförmigen Ausgangsmaterials hergestelltes Formteil, bestehend aus einem scheiben- oder plattenförmigen Grundkörper mit einer Vielzahl von noppen- und/oder stegförmigen Erhebungen mit einer Höhe h und mit im Querschnitt jeweils zwei geneigten Seitenflanken, welche von einer Endkontur der Erhebung ausgehend, über Eckenrundungen mit einem Radius r bzw. r', unmittelbar oder über dazwischen liegende gerade Abschnitte in kurvenförmige Abschnitte mit einem Radius R bzw. R' münden, welche in die Oberflächenkontur des Grundkörpers übergehen, wobei die geraden Abschnitte, bzw. bei einem unmittelbaren Übergang der Eckenrundungen in die kurvenförmigen Abschnitte, die Tangenten am Punkt des Überganges, einen Neigungswinkel α bzw. α' zur Oberflächenkontur im Bereich von 95° bis 135° aufweisen.

Ein derartiges Formteil in Form eines Interkonnektors bzw. einer Endplatte für einen Brennstoffzellenstapel ist beispielsweise im AT6260U U1 oder in der US 2008/0199738 beschrieben.

Interkonnektoren bzw. Endplatten in einem Brennstoffzellenstapel haben die Funktion von Stromsammlern und müssen gleichzeitig eine sichere Trennung der Reaktionsgase zwischen Anoden- und Kathodenseite sowie die Führung dieser Reaktionsgase gewährleisten. Um diese Aufgabe zu erfüllen, werden die Interkonnektoren bzw. Endplatten als metallische Platten oder Scheiben mit noppen- und/oder stegförmigen Erhebungen ausgeführt. Diese Erhebungen sind bei Endplatten einseitig und bei Interkonnektoren auf beiden Seiten des Grundkörpers ausgeführt. Die Gesamtdicke derartiger Interkonnektoren und Endplatten liegt in der Praxis zwischen 1 und 5 mm. Die erhabenen Strukturen sind elektrische Kontaktbereiche zur elektrochemisch aktiven Zelle hin. Die Zwischenräume zwischen den einzelnen noppen- und stegförmigen Erhebungen dienen dann der Führung der Reaktionsgase. Insgesamt muss der Interkonnektor bzw. die Endplatte über die gesamten Abmessungen eine hohe Dichtigkeit aufweisen, um die sichere Trennung der Reaktionsgase zwischen Anoden- und Kathodenseite zu gewährleisten.

Die Herstellung der Endform derartiger Interkonnektoren und Endplatten durch spanabhebende Bearbeitung aus Halbzeug ist sehr kostenintensiv, weshalb sich eine pulvermetallurgische Fertigung, durch Pressen pulverförmiger Ausgangsmaterialien möglichst in die Endform und anschließendes Sintern der gepressten Formteile, anzustreben ist.

Bei der geometrischen Auslegung der Querschnitte für die Gasführung wären an sich rechteckige Querschnitte optimal, da sie einen guten Kompromiss im Hinblick auf maximale Kontaktierungsfläche, bei gleichzeitig ausreichend großem Querschnitt für die Gasführung bilden. Derartige Formen sind jedoch auf pulvermetallurgischem Wege praktisch nicht herstellbar, so dass sich in der Praxis trapezförmige Querschnitte mit geraden, geneigten Flanken und kleinen Übergangsradien sowohl zwischen den Endkonturen der Erhebungen und den geneigten Flanken, als auch zwischen diesen und der Oberflächenkontur des Grundkörpers, durchgesetzt haben. Weiterhin problematisch bei der pulvermetallurgischen Herstellung ist es, dass insbesondere bei Interkonnektoren und Endplatten, die bei oxidkeramischen Hochtemperaturbrennstoffzellenstapeln (solid oxide fuel cell bzw. SOFC) zum Einsatz kommen, vielfach Legierungen mit hohen Chromanteilen als Werkstoff verwendet werden. Derartige Legierungen sind aber bei niedrigen Temperaturen äußerst spröde und können nur sehr schwer verpresst werden.

Um trotz dieser schweren Verpressbarkeit eine ausreichende Dichte und Homogenität der fertigen Interkonnektoren und Endplatten zu gewährleisten, wird entsprechend der AT GM 6.260 ein zweistufiges Pressverfahren unter ganz speziellen Bedingungen vorgeschlagen. Nachteilig dabei ist, dass ein derartiges Pressverfahren kostenaufwändig ist und die erreichte Homogenität des Bauteiles immer noch nicht optimal ist.

Die Aufgabe der Erfindung ist es, ein durch Pressen und Sintern hergestelltes komplexes strukturiertes Formteil, insbesondere einen Interkonnektor bzw. eine Endplatte für einen Brennstoffzellenstapel zu schaffen, das kostengünstig herstellbar ist und das gleichzeitig eine hohe Dichte, verbunden mit einer möglichst großen Homogenität aufweist.

Erfindungsgemäß wird dies dadurch erreicht, dass der Radius R bzw. R' im Bereich von 0,15 bis 1 mm liegt und die Höhe h so dimensioniert ist, dass das Verhältnis R : h bzw. R' : h in einem Bereich von 0,25 bis 1 liegt.

Durch die Erfindung wurde auf überraschende Weise erkannt, dass bei einer Vergrößerung der Übergangsradien der geneigten Seitenflanken zum Grundkörper des Formteiles hin, bei gleichzeitiger Herabsetzung der Höhe h der steg- oder noppenförmigen Erhebungen innerhalb eines ganz speziellen Bereiches, bei der Herstellung des Formteiles, auch durch ein einstufiges Pressverfahren eine sehr hohe Dichte mit geringeren Dichtegradienten und damit eine sehr gleichmäßige Homogenität des Formteiles erreicht wird. Der Übergangsradius r bzw. r' der Endkonturen der Erhebungen zu den geneigten Seitenflächen ist dabei nicht so wesentlich, er wird in der Praxis in einem Bereich zwischen 0,1 und 0,5 mm liegen. Gleichzeitig hat die erfindungsgemäße Ausgestaltung positive Auswirkungen auf die Maßhaltigkeit und Ebenheit des Formteiles während der nachfolgenden Prozessschritte.

Bei einer Auslegung des Formteiles außerhalb der erfindungsgemäß definierten Grenzen nimmt die Dichte und Homogenität signifikant ab, so dass eine Herstellbarkeit durch ein einstufiges Pressverfahren nicht mehr gewährleistet ist.

In einer bevorzugten Ausführung der Erfindung liegt der Neigungswinkel a bzw. a ' im Bereich von 95° bis 120°, der Radius R bzw. R' im Bereich von 0,3 bis 1 mm und das Verhältnis R: h bzw. R' : h in einem Bereich von 0,5 bis 1.

Unter diesen Bedingungen werden sehr gute Werte hinsichtlich Dichte und Homogenität des Formteiles erreicht.

In einer besonders bevorzugten Ausgestaltung der Erfindung liegt der Neigungswinkel α bzw. α' im Bereich von 95° bis 110°, der Radius R bzw. R' im Bereich von 0,3 bis 1 mm und das Verhältnis R : h bzw. R' : h in einem Bereich von 0,7 bis 1.

Unter diesen Bedingungen werden die besten Werte hinsichtlich Dichte und Homogenität des Formteiles erreicht.

Insbesondere von Vorteil ist es, wenn die erfindungsgemäße Ausgestaltung eines Formteiles bei Interkonnektoren bzw. Endplatten von Brennstoffzellenstapeln zur Anwendung kommt. In diesem Fall ist auch bei der Anwendung eines kostengünstigen Herstellverfahrens, durch die hohe erzielbare Dichte des Formteiles, die für Interkonnektoren und Endplatten notwendige Dichtigkeit des Bauteiles für die sichere Gastrennung gewährleistet.

Des weiteren ist die erfindungsgemäße Ausgestaltung des Formteiles dann besonders vorteilhaft, wenn als pulverförmiges Ausgangsmaterial eine Legierung mit mindestens 20 Gew.% Chromanteil, bei Interkonnektoren und Endplatten insbesondere eine Legierung mit 20 bis 30 Gew.% Chrom und 70 bis 80 Gew.% einer Vorlegierung aus Eisen mit 0,5 bis 0,8 Gew.% Seltenerdmetallen, im speziellen Yttrium, oder eine Legierung mit 95 Gew.% Chrom und 5 Gew.% einer Vorlegierung aus Eisen mit 0,5 bis 0,8 Gew.% Yttrium, verwendet wird.

Im Folgenden wird die Erfindung an Hand von Figuren näher erläutert.
Figur 1 zeigt die Dichteverteilung eines erfindungsgemäßen Interkonnektors die durch eine Simulationsberechnung ermittelt wurde.
Figur 2 zeigt die Dichteverteilung eines Interkonnektors nach dem Stand der Technik, die ebenfalls durch eine Simulationsberechnung ermittelt wurde.

Die Simulationsberechnungen zur Untersuchung des Verdichtungsverhaltens beim erfindungsgemäßen Interkonnektor und beim Interkonnektor nach dem Stand der Technik erfolgte durch FEM-(FINITE ELEMENTE METHODE) Simulation mit Hilfe des Drucker/Prager/Cap-Modells. Als Basisdaten für beide Simulationen wurden die Kennwerte des Ausgangspulvers einer Legierung mit 95 Gew.% Chrom und 5 Gew.% einer Vorlegierung aus Eisen mit 0,8 Gew.% Yttrium, wie Kohäsion und Winkel der inneren Reibung, sowie die kinematische Beschreibung des Pressvorganges, die für beide Simulationen dieselben waren, herangezogen.

Zusätzlich wurden die unterschiedlichen geometrischen Ausgestaltungsmerkmale entsprechend der nachfolgenden Tabelle herangezogen.

| Ausgestaltungsmerkmal | erfindungsgemäß (Figur 1) | Stand der Technik (Figur 2) |
|---|---|---|
| | | |
| r | 0,05 mm | 0,05 mm |
| R | 0,35 mm | 0,01 mm |
| h | 0,4 mm | 0,6 mm (Oberseite) |
| | | 0,5 mm (Unterseite) |
| D | 2,5 mm | 2,5 mm |
| R : h | 0,875 | 0,017 (Oberseite) |
| | | 0,020 (Unterseite) |
| α | 95° | 135° |

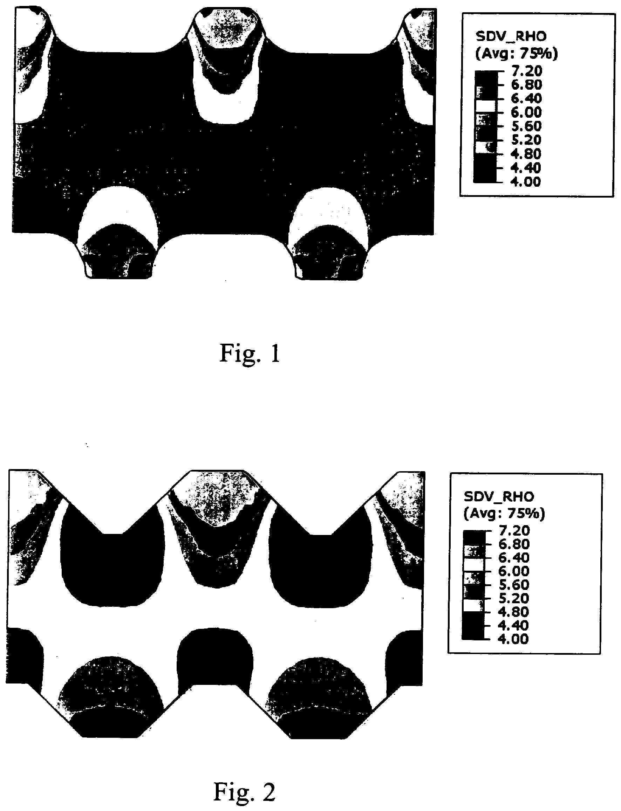

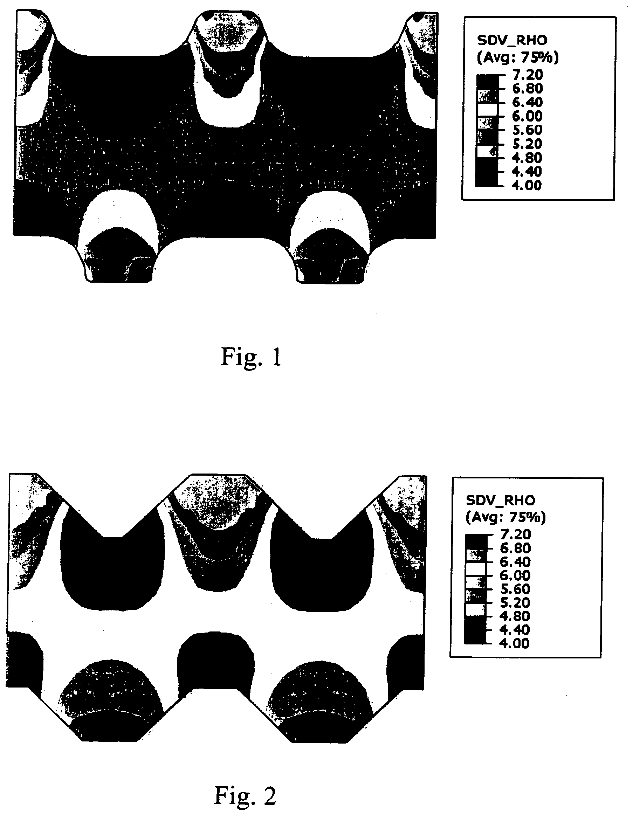

Die erhaltenen Simulationsergebnisse wurden dann in Figur 1 und Figur 2 mit identischer Graustufenskalierung dargestellt. Der Vergleich zeigt, dass die erfindungsgemäße Geometrie nach Figur 1 im unstrukturierten Grundkörper eine höhere Pressdichte aufweist, als die Geometrie nach dem Stand der Technik, entsprechend Figur 2.

Die Bereiche besonders hoher Dichte nahe des Kanalgrundes sind für die erfindungsgemäße Geometrie ebenfalls größer als beim Stand der Technik. Im gesamten Bereich des Grundkörpers der erfindungsgemäßen Geometrie liegt damit einerseits eine erhöhte absolute Pressdichte vor, was zu einer Verbesserung der Gasdichtigkeit führt. Andererseits ist der Dichtegradient über weite Bereiche des Grundkörpers sehr gering, was in den nachfolgenden Prozessschritten, wie beispielsweise dem Sinterprozess, die Neigung zur Ausbildung einer Krümmung verringert.

Die Ergebnisse zeigen deutlich, dass durch die erfindungsgemäße Geometrie eine signifikante Steigerung der Pressdichte und auch der Dichtehomogenität im Grundkörper eines Interkonnektors erreicht werden kann. Die erfindungsgemäße Geometrie verbessert damit die Gasdichtigkeit des Gesamtbauteiles, ohne auf ein zweistufiges Pressverfahren angewiesen zu sein.

Figur 3 zeigt schematisch in vergrößertem Maßstab einen Ausschnitt eines erfindungsgemäßen Interkonnektors für einen Brennstoffzellenstapel im Schnitt. Der Interkonnektor weist einen plattenförmigen Grundkörper -1- mit beidseitigen Erhebungen -2- auf. Die im Schnitt trapezförmigen Erhebungen -2- mit der Höhe h, welche über die Gesamterstreckung des Interkonnektors noppenförmig, durchgehend stegförmig, oder auch segmentiert stegförmig ausgebildet sein können, bilden durch ihre Zwischenräume die Kanäle für die Gasführung des Interkonnektors. Die Endkontur -3- jeder Erhebung -2- geht über Eckenrundungen -4- bzw. -4'- mit einem Radius r bzw. r' in geneigte Seitenflanken mit einem geraden Abschnitt -5-bzw. 5' über. Die geraden Abschnitte -5- bzw. -5'- gehen dann in kurvenförmige Abschnitte -6- bzw. -6'- mit einem Radius R bzw. R' über. Diese wiederum gehen dann übergangslos in die Oberflächenkontur -7- bzw. -7'- des Grundkörpers -1- über. Die geneigten Seitenflächen schließen einen Winkel α bzw. α' mit der Oberflächenkontur -7- bzw. -7'- des Grundkörpers -1- ein. Ebenso wäre es denkbar, dass bei kurvenförmigen Abschnitten -6- bzw. -6'- mit sehr großen Radien R bzw. R' und kleinen Höhenabmessungen h der Erhebungen -2-, die Eckenrundungen -4-bzw. -4'- direkt ohne die dazwischen liegenden geraden Abschnitte -5- bzw. -5'- in die kurvenförmigen Abschnitte -6- bzw. -6'- münden. In diesem Fall schließen die Tangenten an den Übergängen der Eckenrundungen -4- bzw. -4'- in die kurvenförmigen Abschnitte -6- bzw. -6'-, die Neigungswinkel a bzw. α' mit der Oberflächenkontur -7- bzw. -7'- des Grundkörpers -1- ein.

Figur 4 zeigt schematisch in vergrößertem Maßstab den Ausschnitt einer erfindungsgemäßen Endplatte für einen Brennstoffzellenstapel im Schnitt. Die Erhebungen sind genauso wie beim Interkonnektor nach Figur 3 ausgeführt, im Unterschied dazu jedoch nur auf einer Seite des Grundkörpers.

## Patentansprüche

1. Durch Pressen und Sintern eines pulverförmigen Ausgangsmaterials hergestelltes Formteil, bestehend aus einem scheiben- oder plattenförmigen Grundkörper (1) mit einer Vielzahl von noppen- und/oder stegförmigen Erhebungen (2) mit einer Höhe h und mit im Querschnitt jeweils zwei geneigten Seitenflanken, welche von einer Endkontur (3) der Erhebung (2) ausgehend; über Eckenrundungen (4,4') mit einem Radius r bzw. r'; unmittelbar oder über dazwischen liegende gerade Abschnitte (5,5') in kurvenförmige Abschnitte (6,6') mit einem Radius R,R' münden, welche in die Oberflächenkontur (7,7') des Grundkörpers (1) übergehen, wobei die geraden Abschnitte (5,5'), bzw. bei einem unmittelbaren Übergang der Eckenrundungen (4,4') in die kurvenförmigen Abschnitte (6,6'), die Tangenten am Punkt des Überganges, einen Neigungswinkel a bzw. α' zur Oberflächenkontur (7,7') im Bereich von 95° bis 135° aufweisen,
**dadurch gekennzeichnet,**
**dass** der Radius R bzw. R' im Bereich von 0,15 bis 1 mm liegt und die Höhe h so dimensioniert ist, dass das Verhältnis R : h bzw. R' : h in einem Bereich von 0,25 bis 1 liegt.

2. Durch Pressen und Sintern eines pulverförmigen Ausgangsmaterials hergestelltes Formteil nach Anspruch 1, **dadurch gekennzeichnet, dass** der Neigungswinkel α,α' im Bereich von 95° bis 120°, der Radius R bzw. R' im Bereich von 0,3 bis 1 mm und das Verhältnis R : h bzw. R' : h in einem Bereich von 0,5 bis 1 liegt.

3. Durch Pressen und Sintern eines pulverförmigen Ausgangsmaterials hergestelltes Formteil nach Anspruch 1, **dadurch gekennzeichnet, dass** der Neigungswinkel α,α' im Bereich von 95° bis 110°, der Radius R bzw. R' im Bereich von 0,3 bis 1 mm und das Verhältnis R : h bzw. R' : h in einem Bereich von 0,7 bis 1 liegt.

4. Durch Pressen und Sintern eines pulverförmigen Ausgangsmaterials hergestelltes Formteil nach einem der Ansprüche 1 bis 3, **dadurch gekennzeichnet, dass** das Formteil der Interkonnektor oder die Endplatte eines Brennstoffzellenstapels ist.

5. Durch Pressen und Sintern eines pulverförmigen Ausgangsmaterials hergestelltes Formteil nach einem der Ansprüche 1 bis 4, **dadurch gekennzeichnet, dass** das pulverförmige Ausgangsmaterial eine Legierung mit mindestens 20 Gew.% Chromanteil ist.

6. Durch Pressen und Sintern eines pulverförmigen Ausgangsmaterials hergestellter Interkonnektor bzw. Endplatte nach Anspruch 4, **dadurch gekennzeichnet, dass** das pulverförmige Ausgangsmaterial aus 20 bis 30 Gew.% Chrom und 70 bis 80 Gew.% einer Vorlegierung aus Eisen mit 0,5 bis 0,8 Gew.% Seltenerdmetallen, insbesondere Yttrium, besteht.

7. Durch Pressen und Sintern eines pulverförmigen Ausgangsmaterials hergestellter Interkonnektor bzw. Endplatte nach Anspruch 3, **dadurch gekennzeichnet, dass** das pulverförmige Ausgangsmaterial aus 95 Gew.% Chrom und 5 Gew.% einer Vorlegierung aus Eisen mit 0,5 bis 0,8 Gew.% Yttrium besteht.

## Claims

1. Shaped part which is produced by pressing and sintering a pulverulent starting material and consists of a disc-shaped or plate-shaped basic body (1) having a multiplicity of knob-like and/or ridge-like elevations (2) with a height h and with in each case, in cross section, two inclined side flanks which lead, proceeding from an end contour (3) of the elevation (2), via rounded corner portions (4, 4') with a radius r or r' directly or via intermediate rectilinear portions (5, 5') into curved portions (6, 6') with a radius R, R', which merge into the surface contour (7, 7') of the basic body (1), wherein the rectilinear portions (5, 5') or, in the case of a direct transition of the rounded corner portions (4, 4') into the curved portions (6, 6'), the tangents at the point of the transition, have an angle of inclination α or α' with respect to the surface contour (7, 7') in the range of 95° to 135°,
**characterized**
**in that** the radius R or R' is in the range of 0.15 to 1 mm and the height h is dimensioned such that the ratio R : h or R' : h is in a range of 0.25 to 1.

2. Shaped part which is produced by pressing and sintering a pulverulent starting material according to Claim 1, **characterized in that** the angle of inclination α, α' is in the range of 95° to 120°, the radius R or R' is in the range of 0.3 to 1 mm and the ratio R : h or R': h is in a range of 0.5 to 1.

3. Shaped part which is produced by pressing and sintering a pulverulent starting material according to Claim 1, **characterized in that** the angle of inclination α, α' is in the range of 95° to 110°, the radius R or R' is in the range of 0.3 to 1 mm and the ratio R : h or R' : h is in a range of 0.7 to 1.

4. Shaped part which is produced by pressing and sintering a pulverulent starting material according to one of Claims 1 to 3, **characterized in that** the shaped part is the interconnector or the end plate of a fuel cell stack.

5. Shaped part which is produced by pressing and sintering a pulverulent starting material according to one of Claims 1 to 4, **characterized in that** the pulverulent starting material is an alloy having a chromium content of at least 20% by weight.

6. Interconnector or end plate which is produced by pressing and sintering a pulverulent starting material according to Claim 4, **characterized in that** the pulverulent starting material consists of 20 to 30% by weight chromium and 70 to 80% by weight of a prealloy of iron comprising 0.5 to 0.8% by weight rare earth metals, in particular yttrium.

7. Interconnector or end plate which is produced by pressing and sintering a pulverulent starting material according to Claim 3, **characterized in that** the pulverulent starting material consists of 95% by weight chromium and 5% by weight of a prealloy of iron comprising 0.5 to 0.8% by weight yttrium.

## Revendications

1. Pièce façonnée fabriquée par pressage et frittage d'un matériau de départ sous forme de poudre, constituée par un corps de base (1) sous forme de disque ou de plaque, présentant une multitude d'élévations (2) sous forme de picots et/ou d'âmes d'une hauteur h et présentant, en section transversale, à chaque fois deux flancs latéraux inclinés, qui débouchent, partant d'un contour d'extrémité (3) de l'élévation (2) ; via des arrondis de coin (4,4') d'un rayon r ou r' ; directement ou via des sections droites (5,5') intermédiaires, en des sections incurvées (6,6') d'un rayon R, R', qui se changent en contour de surface (7,7') du corps de base (1), les sections droites (5,5') ou, dans le cas d'une transition immédiate des arrondis de coin (4,4') en sections incurvées (6,6'), les tangentes au point de la transition, présentant un angle d'inclinaison α ou α' par rapport au contour de surface (7,7') dans la plage de 95° à 135°, **caractérisée en ce que** le rayon R ou R' se situe dans la plage de 0,15 à 1 mm et la hauteur h est dimensionnée de manière telle que le rapport R:h ou R':h se situe dans une plage de 0,25 à 1.

2. Pièce façonnée fabriquée par pressage et frittage d'un matériau de départ sous forme de poudre selon la revendication 1, **caractérisée en ce que** l'angle d'inclinaison α,α' se situe dans la plage de 95° à 120°, le rayon R ou R' se situe dans la plage de 0,3 à 1 mm et le rapport R:h ou R':h se situe dans la plage de 0,5 à 1.

3. Pièce façonnée fabriquée par pressage et frittage d'un matériau de départ sous forme de poudre selon la revendication 1, **caractérisée en ce que** l'angle d'inclinaison α,α' se situe dans la plage de 95° à 110°, le rayon R ou R' se situe dans la plage de 0,3 à 1 mm et le rapport R:h ou R':h se situe dans la plage de 0,7 à 1.

4. Pièce façonnée fabriquée par pressage et frittage d'un matériau de départ sous forme de poudre selon l'une quelconque des revendications 1 à 3, **caractérisée en ce que** la pièce façonnée est l'interconnecteur ou la plaque d'extrémité d'un empilement de piles à combustible.

5. Pièce façonnée fabriquée par pressage et frittage d'un matériau de départ sous forme de poudre selon l'une quelconque des revendications 1 à 4, **caractérisée en ce que** le matériau de départ sous forme de poudre est un alliage présentant une proportion de chrome d'au moins 20% en poids.

6. Interconnecteur ou plaque d'extrémité fabriqué(e) par pressage et frittage d'un matériau de départ sous forme de poudre selon la revendication 4, caractérisé(e) en ce que le matériau de départ sous forme de poudre est constitué par 20 à 30% en poids de chrome et par 70 à 80% en poids d'un pré-alliage de fer avec 0,5 à 0,8% en poids de métaux des terres rares, en particulier l'yttrium.

7. Interconnecteur ou plaque d'extrémité fabriqué(e) par pressage et frittage d'un matériau de départ sous forme de poudre selon la revendication 3, caractérisé(e) en ce que le matériau de départ sous forme de poudre est constitué par 95% en poids de chrome et par 5% en poids d'un pré-alliage de fer avec 0,5 à 0,8% en poids d'yttrium.
